# EUROPEAN PATENT APPLICATION

(11) **EP 4 742 638 A1**
(43) Date of publication of application: **13.05.2026**
(21) Application number: 23944196.7
(22) Date of filing: 17.11.2023
(51) Int. Cl.: H04L 69/08

(54) **CONVERSION APPARATUS AND TRANSFORMER SUBSTATION**

(30) Priority: 03.07.2023 CN 202321723554 U
(71) Applicant: Contemporary Amperex Technology Co., Limited, Ningde, Fujian 352100 (CN)
(72) Inventor: WANG, Chongxi, Ningde, Fujian 352100 (CN); WEN, Zhengwu, Ningde, Fujian 352100 (CN); ZHANG, Xu, Ningde, Fujian 352100 (CN); YAN, Zhiwei, Ningde, Fujian 352100 (CN); ZHANG, Xiaoqiang, Ningde, Fujian 352100 (CN)
(74) Representative: Ran, Handong
(86) International application number: PCT/CN2023/132277
(87) International publication number: WO 2025/007475

(57) **Abstract**

Disclosed in the present application is a conversion apparatus, comprising a CAN protocol transceiving interface; a communication protocol transceiving interface; and a protocol conversion module, which protocol conversion module is provided with a first interface and a second interface, wherein the first interface is connected to the CAN protocol transceiving interface, and the second interface is connected to the communication protocol transceiving interface. The protocol conversion module is configured to convert first data into second data, or is configured to convert the second data into the first data, wherein the first data is transmitted in a CAN protocol, and the second data is transmitted in a communication protocol. The embodiments of the present application can realize mutual conversion between CAN protocol data and communication protocol data, thereby improving the communication efficiency.

## Description

### CROSS-REFERENCE TO RELATED APPLICATION

The present application claims priority to Chinese Patent Application No. 202321723554.5, filed on July 03, 2023 and titled "CONVERSION APPARATUS AND TRANSFORMER SUBSTATION", the disclosure of which is incorporated herein by reference in its entirety.

### TECHNICAL FIELD

The present application relates to the technical field of optoelectronic communication, and in particular, to a conversion apparatus and a transformer substation.

### BACKGROUND

A transformer substation is a modern transformer substation built based on communication standards, enabling information sharing and interoperability among intelligent electrical equipment within the transformer substation. Specifically, the transformer substations include transformer substation intelligent apparatuses and energy storage systems.

The transformer substation intelligent apparatuses (such as optical CTs, optical PTs, control and protection apparatuses, etc.) typically use communication protocols for communication, whereas the energy storage systems typically use the Controller Area Network (CAN) protocol for communication, and do not support communication protocol communication, making it impossible for the energy storage systems to communicate directly with the transformer substation intelligent apparatuses. Current products on the market typically convert optical fibers into optical fiber Ethernet or optical fiber serial ports, requiring two apparatuses to be paired for CAN bridging to improve the transmission distance and anti-interference capability of CAN communication. However, they cannot realize mutual conversion between CAN protocol data and communication protocol data, resulting in low communication efficiency.

### SUMMARY OF THE INVENTION

The present application provides a conversion apparatus and a transformer substation that can realize the mutual conversion between CAN protocol data and standard protocol data, thereby improving the communication efficiency.

In a first aspect, the present application provides a conversion apparatus, including:
a CAN protocol transceiver interface;
a communication protocol transceiver interface; and
a protocol conversion module provided with a first interface and a second interface, the first interface being connected to the CAN protocol transceiver interface, and the second interface being connected to the communication protocol transceiver interface.

The protocol conversion module is configured to convert first data into second data, or to convert the second data into the first data, wherein the first data is transmitted in a CAN protocol, and the second data is transmitted in a communication protocol.

In the technical solution of the embodiments of the present application, the first data transmitted using the CAN protocol and the second data transmitted using the communication protocol are sent to the protocol conversion module through the CAN protocol transceiver interface and the communication protocol transceiver interface for conversion between the protocol data, realizing the mutual conversion between the CAN protocol data and the communication protocol data, thereby improving the communication efficiency between the energy storage systems and the transformer substation intelligent apparatuses in the intelligent transformer substation.

In a possible implementation of the first aspect, the protocol conversion module includes a control unit; or
the protocol conversion module includes a control unit and a programmable logic gate array that are interconnected.

Through flexible configuration of the protocol conversion module, the conversion between the CAN protocol and different types of communication protocols can be realized, thereby allowing high versatility of the apparatus.

A profile is stored in the control unit, and the control unit uses the profile to convert the first data into the second data, or to convert the second data into the first data.

The profile in the control unit can improve the versatility of the conversion apparatus for protocol conversion.

In a possible implementation of the first aspect, in the case where the protocol conversion module includes the programmable logic gate array, the second interface includes a plurality of first sub-interfaces and a plurality of second sub-interfaces;
the first interface is provided in the control unit, and the first sub-interface and the second sub-interface are provided in the programmable logic gate array; or
the first interface and the second sub-interface are provided in the control unit, and the first sub-interface is provided in the programmable logic gate array.

In a possible implementation of the first aspect, the first sub-interface is an Ethernet protocol data transceiver interface configured to transmit and receive Ethernet protocol data; and the second sub-interface is a custom protocol data transceiver interface configured to transmit and receive custom protocol data.

By using the interface configuration described above, the second sub-interface can be flexibly configured according to actual protocol conversion needs, thereby reducing equipment manufacturing costs.

In a possible implementation of the first aspect, the protocol conversion module further includes an Ethernet data link layer driver and a custom protocol conversion submodule, which are respectively connected to the communication protocol transceiver interface.

By providing the Ethernet data link layer driver and the custom protocol conversion submodule, valid data can be extracted or encapsulated from the first data and the second data, thereby improving the conversion efficiency.

In a possible implementation of the first aspect, the Ethernet data link layer driver is provided at the programmable logic gate array, and the custom protocol conversion submodule is provided at the programmable logic gate array or the control unit, wherein the first sub-interface is provided at the Ethernet data link layer driver, and the second sub-interface is provided at the custom protocol conversion submodule;
the Ethernet data link layer driver is configured to transmit the Ethernet protocol data; and
the custom protocol conversion submodule is configured to transmit the custom protocol data.

By providing the Ethernet data link layer driver and the custom protocol conversion submodule, valid data can be extracted or encapsulated from the first data and the second data, thereby improving the conversion efficiency.

In a possible implementation of the first aspect, the conversion apparatus further includes a CAN protocol transceiver module and a communication protocol transceiver module, the CAN protocol transceiver module is connected to the protocol conversion module through the CAN protocol transceiver interface, and the communication protocol transceiver module is connected to the protocol conversion module through the communication protocol transceiver interface.

In a possible implementation of the first aspect, the communication protocol transceiver module includes a custom protocol transceiver submodule and a plurality of Ethernet protocol transceiver submodules, the custom protocol transceiver submodule is connected to the custom protocol conversion submodule, and the plurality of Ethernet protocol transceiver submodules are all connected to the Ethernet data link layer driver.

By providing the custom protocol transceiver submodule and the plurality of Ethernet protocol transceiver submodules, conversion between the CAN protocol and different types of communication protocols can be realized, thereby allowing high versatility of the apparatus.

In a possible implementation of the first aspect, the Ethernet protocol transceiver submodule includes a port physical layer and a first optoelectronic module that are interconnected, the Ethernet data link layer driver is connected to the port physical layer through the first sub-interface, and the first optoelectronic module is provided with an Ethernet communication interface, wherein the port physical layer is configured for signal format conversion of the Ethernet protocol data transmitted and received by the Ethernet communication interface.

By providing the port physical layer, the first optoelectronic module, and the Ethernet communication interface, accurate reception and transmission of the Ethernet data can be realized, thereby improving the operation efficiency of the conversion apparatus.

In a possible implementation of the first aspect, the custom protocol transceiver submodule includes a driving module and a plurality of second optoelectronic modules connected to the driving module, the custom protocol conversion submodule is connected to the driving module through the second sub-interface, and the second optoelectronic module is provided with a custom protocol communication interface, wherein the driving module is configured for signal format conversion of the custom protocol data received and transmitted by the custom protocol communication interface.

By providing the driving module, the second optoelectronic module, and the custom protocol communication interface, accurate reception and transmission of the custom protocol data can be realized, thereby improving the operation efficiency of the conversion apparatus.

In a possible implementation of the first aspect, the CAN protocol transceiver module includes a plurality of CAN protocol transceivers, each of the plurality of CAN protocol transceivers being redundant to another; and the CAN protocol transceiver is provided with a CAN communication interface configured to transmit the first data.

In a possible implementation of the first aspect, the CAN protocol transceiver module further includes an isolation module connected to the plurality of CAN protocol transceivers, the isolation module being further connected to the control unit; and the isolation module is configured to isolate the CAN protocol transceivers from the control unit to prevent voltage in the CAN protocol transceivers from damaging the control unit.

By providing the plurality of CAN protocol transceivers, if one of the CAN protocol transceivers fails, another CAN protocol transceiver is automatically switched to for transmission of the first data, thereby improving the fault tolerance of the conversion apparatus.

In a possible implementation of the first aspect, the conversion apparatus further includes a power supply module, which is respectively connected to the protocol conversion module and the CAN protocol transceiver module, and configured to supply power to the protocol conversion module and the CAN protocol transceiver module.

By providing the power supply module, the endurance capacity of the conversion apparatus is guaranteed.

In a possible implementation of the first aspect, the power supply module includes a redundant power supply submodule and an isolated power source and a power conversion module respectively connected to the redundant power supply submodule, the redundant power supply submodule is connected to the protocol conversion module, and the isolated power source is further connected to the CAN protocol transceiver, wherein the redundant power supply submodule further includes a plurality of power input interfaces, each of the plurality of power input interfaces being redundant to another.

By providing the redundant power supply submodule, the isolated power source, and the power conversion module, the power supply of the conversion apparatus is guaranteed. At the same time, through the redundancy design, power can be supplied as long as any input power interface is valid, which increases the reliability of the power source.

In a second aspect, the present application provides a transformer substation including a conversion apparatus described in any of the embodiments of the first aspect.

The foregoing description is merely an overview of the technical solutions of the present application. In order that technical means of the present application can be understood more clearly so that the technical means can be implemented according to content of the specification, and in order that the foregoing and other objectives, features, and advantages of the present application can be understood more clearly, specific implementations of the present application are described below.

### DESCRIPTION OF DRAWINGS

The features, advantages, and technical effects of exemplary embodiments of the present application will be described with reference to the accompanying drawings.
FIG. 1 is a schematic structural diagram of a conversion apparatus according to an embodiment of the present application;
FIG. 2 is a schematic structural diagram of a protocol conversion module including a control unit according to an embodiment of the present application;
FIG. 3 is another schematic structural diagram of a protocol conversion module including a control unit and a programmable logic gate array according to an embodiment of the present application;
FIG. 4 is a schematic structural diagram of a protocol conversion module including a second interface according to an embodiment of the present application;
FIG. 5 is another schematic structural diagram of a protocol conversion module including a second interface according to an embodiment of the present application;
FIG. 6 is a schematic structural diagram of a protocol conversion module including a submodule according to an embodiment of the present application;
FIG. 7 is another schematic structural diagram of a protocol conversion module including a submodule according to an embodiment of the present application;
FIG. 8 is a schematic structural diagram showing connection between a protocol conversion module and a communication protocol transceiver module according to an embodiment of the present application;
FIG. 9 is another schematic structural diagram of a conversion apparatus according to an embodiment of the present application;
FIG. 10 is another schematic structural diagram showing connection between a protocol conversion module and a communication protocol transceiver module according to an embodiment of the present application;
FIG. 11 is another schematic structural diagram of a conversion apparatus according to an embodiment of the present application; and
FIG. 12 is another schematic structural diagram of a conversion apparatus according to an embodiment of the present application.

The accompanying drawings may not be drawn in accordance with the actual scale.

1: CAN protocol transceiver module; 2: Protocol conversion module; 3: Communication protocol transceiver module; 21: First interface; 22: Second interface; 11: CAN protocol transceiver; 12: Isolation module; 13: CAN communication interface; 23: Control unit; 24: Programmable logic gate array; 241: Ethernet data link layer driver; 242: Custom protocol conversion submodule; 221: First sub-interface; 222: Second sub-interface; 31: Ethernet protocol transceiver submodule; 32: Custom protocol transceiver submodule; 311: Port physical layer; 312: First optoelectronic module; 3121: Ethernet communication interface; 321: Driving module; 322: Second optoelectronic module; 3221: Custom protocol communication interface; 4: Power supply module; 41: Redundant power supply submodule; 42: Isolated power source; 43: Power conversion module; 14: CAN protocol transceiver interface; 33: Communication protocol transceiver interface.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are some, rather than all, of the embodiments of the present application. Based on the embodiments in the present application, all other embodiments obtained by ordinary technicians in this field without creative work belong to the protection scope of the present application.

Unless otherwise defined, all technical and scientific terms used in the present application have the same meanings as generally understood by those skilled in the technical art of the present application; the terms used in the description of the present application are for the purpose of describing specific embodiments only and are not intended to limit the present application; the terms "include" and "have" in the description and claims of the present application and in the description of the above accompanying drawings and any variation thereof are intended to cover the non-exclusive inclusion. In the specification, claims, and the abovementioned accompanying drawings of the present application, the terms "first", "second", and so on are intended to distinguish between similar objects rather than indicating a specific order.

In the description of the present disclosure, it is to be noted that unless otherwise specified and limited, the terms "arranging", "linking", "connection", and "attaching" are to be broadly understood, for example, the connection can be fixed connection, detachable connection, or integrated connection; and the linking can be mechanical connection; the linking can be direct linking, or indirect linking through an intermediate medium, or internal communication of two components. For those of ordinary skill in the art, the specific meanings of the aforementioned terms in the present application may be understood on a case-by-case basis.

Transformer substation intelligent apparatuses (such as optical CTs, optical PTs, control and protection apparatuses, etc.) typically use IEC60044-8 protocol and optical fiber communication for data interaction, and IEC61850MMS, Goose, SV protocol, and optical fiber communication for interconnection between different apparatuses. However, energy storage systems typically use CAN protocol for communication, and do not support IEC61850MMS, Goose, SV protocol, and optical fiber communication, so that the energy storage systems cannot directly communicate with the transformer substation intelligent apparatuses. Current products on the market typically convert optical fibers into optical fiber Ethernet or optical fiber serial ports, requiring two apparatuses to be paired for CAN bridging to improve the transmission distance and anti-interference capability of CAN communication. However, they cannot realize conversion between CAN protocol data and standard protocol data, resulting in low communication efficiency.

In order to solve the above technical problems, the embodiments of the present application provide a conversion apparatus and a transformer substation, and the conversion apparatus and the transformer substation provided by the embodiments of the present application are described in detail below in conjunction with the accompanying drawings.

The conversion apparatus provided by the embodiments of the present application is described first below.

The conversion apparatus disclosed in the embodiments of the present application can be widely used in various industrial control, process control, and traffic control scenarios.

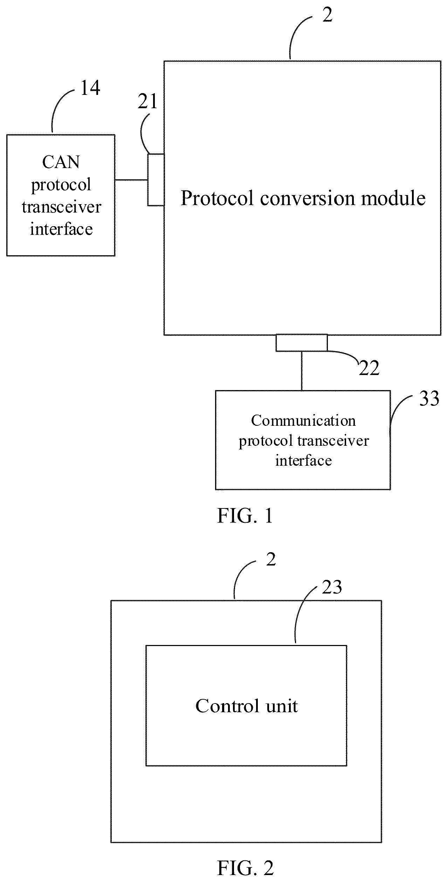

FIG. 1 is a schematic structural diagram of a conversion apparatus according to an embodiment of the present application. As shown in FIG. 1, the conversion apparatus includes a CAN protocol transceiver interface 14, a communication protocol transceiver interface 33, and a protocol conversion module 2.

Specifically, the protocol conversion module 2 may be of the model Xilinx ZYNQ 7010. The protocol conversion module 2 is provided with a first interface 21 and a second interface 22. The first interface 21 is connected to the CAN protocol transceiver interface 14, and the second interface 22 is connected to the communication protocol transceiver interface 33. The first interface 21 is used to connect the CAN protocol transceiver interface 14 to the protocol conversion module 2, and at the same time, transmit first data between the protocol conversion module 2 and the CAN protocol transceiver interface 14. The second interface 22 is used to connect the communication protocol transceiver interface 33 to the protocol conversion module 2, and at the same time, transmit second data between the communication protocol transceiver interface 33 and the protocol conversion module 2.

The CAN protocol transceiver interface 14 is used to receive and transmit the first data, and the communication protocol transceiver interface 33 is used to receive and transmit the second data.

Specifically, when the conversion apparatus needs to convert the first data into the second data, the CAN protocol transceiver interface 14 receives the first data to be converted from the outside and transmits it to the protocol conversion module 2. The protocol conversion module 2 converts the first data transmitted in the CAN protocol into the second data transmitted in the communication protocol, and finally outputs the second data through the communication protocol transceiver interface 33. When the conversion apparatus needs to convert the second data into the first data, the communication protocol transceiver interface 33 receives the second data to be converted from the outside and transmits it to the protocol conversion module 2. The protocol conversion module 2 converts the second data transmitted in the communication protocol into the first data transmitted in the CAN protocol, and finally outputs the first data through the CAN protocol transceiver interface 14.

In the embodiments of the present application, as the CAN protocol transceiver interface 14, the communication protocol transceiver interface 33, and the protocol conversion module 2 are provided, the first data transmitted using the CAN protocol and the second data transmitted using the communication protocol are transmitted to the protocol conversion module 2 through the CAN protocol transceiver interface 14 and the communication protocol transceiver interface 33 for conversion between the protocol data, thereby realizing the mutual conversion between the CAN protocol data and the standard protocol data, thereby improving the communication efficiency between the energy storage systems and the transformer substation intelligent apparatuses in the intelligent transformer substation.

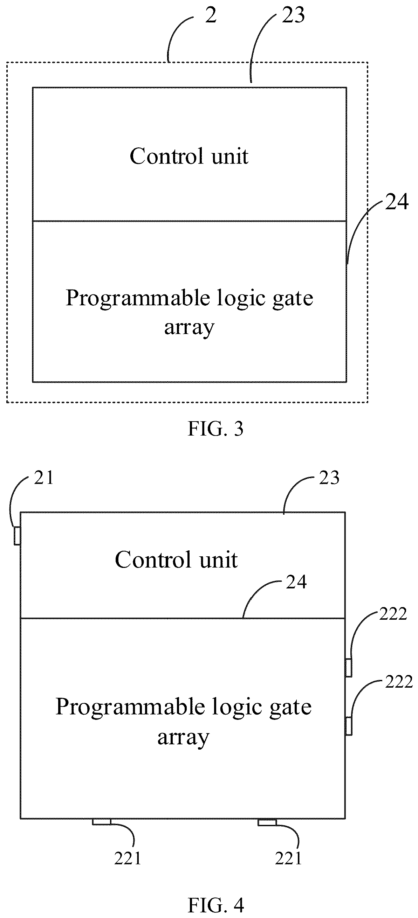

FIG. 2 is a schematic structural diagram of a protocol conversion module including a control unit according to an embodiment of the present application. FIG. 3 is another schematic structural diagram of a protocol conversion module including a control unit and a programmable logic gate array according to an embodiment of the present application.

As shown in FIGS. 2 and 3, in an embodiment of the present application, the protocol conversion module 2 includes a control unit 23; or the protocol conversion module 2 includes a control unit 23 and a programmable logic gate array 24 that are interconnected.

The control unit 23 may be a single-core ARM processor or a heterogeneous dual-core ARM processor.

It can be understood that the protocol conversion module 2 have two configurations. In one configuration, it may only include the control unit 23, and in the other configuration, it includes the control unit 23 and the programmable logic gate array 24. Specifically, in the case where the protocol conversion module 2 includes the control unit 23, the conversion apparatus can realize the conversion between the CAN protocol and other communication protocols than the Ethernet protocol, such as IEC61850MMS, IEC 60870-5-101/10, Goose, and SV protocols, etc. In the case where the protocol conversion module 2 includes the control unit 23 and the programmable logic gate array 24, the conversion apparatus can realize the conversion between the CAN protocol and all communication protocols including the Ethernet protocol, such as Ethernet protocol like IEC61850 protocol and IEC60044-8 protocol etc, as well as IEC61850MMS, IEC 60870-5-101/10, Goose, and SV protocols, etc. In the case where the protocol conversion module 2 includes the control unit 23 and the programmable logic gate array 24, the conversion apparatus can also realize the conversion between different communication protocols, e.g., mutual conversion between IEC61850 protocol, IEC60044-8 protocol, IEC61850MMS, IEC 60870-5-101/10, Goose, and SV protocols.

Specifically, in the case where the protocol conversion module 2 includes the control unit 23 and the programmable logic gate array 24, the control unit 23 and the programmable logic gate array 24 can communicate with each other via an internal high-speed bus. The control unit 23 is used to, upon detecting first valid data transmitted in the CAN protocol in the first data input through the CAN protocol transceiver interface 14, convert the first valid data into second valid data transmitted in the communication protocol. The programmable logic gate array 24 is used to re-encapsulate the second valid data and output it through the communication protocol transceiver interface 33.

Alternatively, the programmable logic gate array 24 is used to, upon detecting the second data input through the communication protocol transceiver interface 33, extract the second valid data from the second data. The control unit 23 is used to convert the second valid data into the first valid data transmitted in the CAN protocol.

In the case where the protocol conversion module 2 only includes the control unit 23, the control unit 23 is used to, upon detecting the first valid data transmitted in the CAN protocol in the first data input through the CAN protocol transceiver interface 14, convert the first valid data into the second valid data transmitted in the communication protocol, and then re-encapsulate the second valid data and output it through the communication protocol transceiver interface 33.

Alternatively, it is used to, upon detecting the second data input through the communication protocol transceiver interface 33, extract the second valid data from the second data and convert the second valid data into the first valid data transmitted in the CAN protocol.

In this embodiment, through flexible configuration of the protocol conversion module 2, conversion between the CAN protocol and different types of communication protocols can be realized, thereby allowing high versatility of the apparatus.

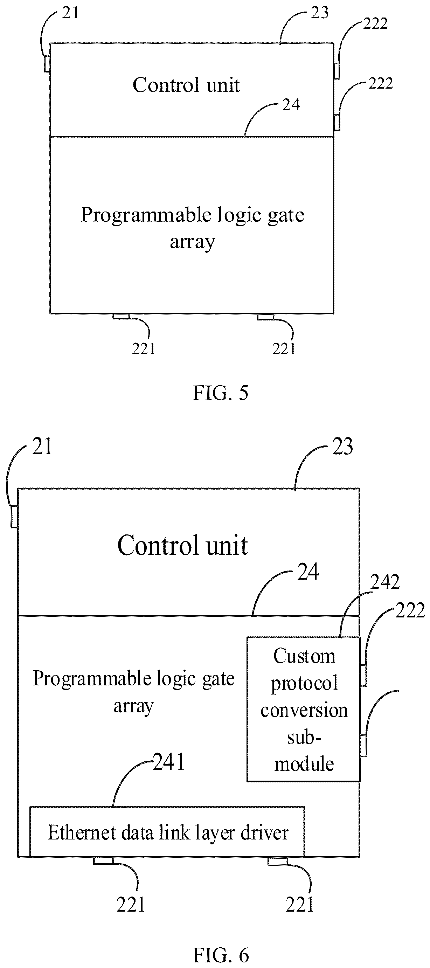

As shown in FIGS. 4 and 5, FIG. 4 is a schematic structural diagram of a protocol conversion module including a second interface according to an embodiment of the present application; and FIG. 5 is another schematic structural diagram of a protocol conversion module including a second interface according to an embodiment of the present application.

In an embodiment of the present application, a profile is stored in the control unit 23, and the control unit 23 uses the profile to convert the first data into the second data, or to convert the second data into the first data. The profile is stored in the control unit 23. In protocol conversion, the memory in the control unit 23 needs to be called to complete the conversion between various protocols. In addition, the profile is also used to configure the method of conversion between various protocols, such as the method of conversion between CAN protocol and IEC61850 protocol, CAN protocol and IEC60044-8 protocol, etc. When changing the protocol conversion type, the profile can be updated synchronously to complete the conversion between various protocols, which can improve the versatility of the conversion apparatus for protocol conversion.

In an embodiment of the present application, in the case where the protocol conversion module 2 includes the programmable logic gate array 24, the second interface 22 includes a first sub-interface 221 and a second sub-interface 222; the first interface 21 is provided in the control unit 23, and the first sub-interface 221 and the second sub-interface 222 are provided in the programmable logic gate array 24; or the first interface 21 and the second sub-interface 222 are provided in the control unit 23, and the first sub-interface 221 is provided in the programmable logic gate array 24.

In this embodiment, the first interface 21 is used to connect the control unit 23 to the CAN protocol transceiver interface 14, and to transmit the first data between the control unit 23 and the CAN protocol transceiver interface 14. The first sub-interface 221 in the second interface 22 is an Ethernet protocol data transceiver interface, configured to transmit and receive the Ethernet protocol data. The second sub-interface 222 is a custom protocol data transceiver interface, configured to transmit and receive the custom protocol data.

It can be understood that the second sub-interface 222 has two configurations. In one configuration, the second sub-interface 222 is provided in the control unit 23, and in the other configuration, the second sub-interface 222 is provided in the programmable logic gate array 24. The Ethernet protocol data includes IEC61850 and IEC60044-8 protocols. The custom protocols include standard protocols in the communication field and protocols developed by technical personnel, wherein the standard protocols include, for example, IEC61850, IEC60044-8, IEC61850MMS, IEC 60870-5-101/10, Goose, SV protocols, etc.

In this embodiment, through the interface configuration described above, the second sub-interface 222 can be configured flexibly according to the actual protocol conversion requirements, thereby reducing the equipment manufacturing cost.

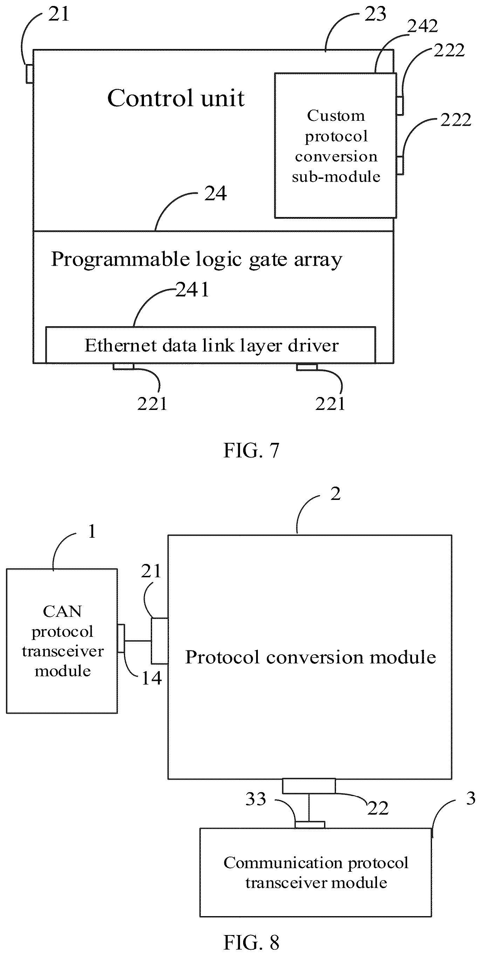

As shown in FIGS. 6 and 7, FIG. 6 is a schematic structural diagram of a protocol conversion module including a submodule according to an embodiment of the present application; and FIG. 7 is another schematic structural diagram of a protocol conversion module including a submodule according to an embodiment of the present application.

In an embodiment of the present application, the protocol conversion module 2 further includes an Ethernet data link layer driver 241 and a custom protocol conversion submodule 242, which are respectively connected to the communication protocol transceiver module 3. Specifically, the Ethernet data link layer driver 241 is configured to extract valid Ethernet data from the Ethernet protocol data from the communication protocol transceiver module 3, or to re-encapsulate the valid Ethernet data from the control unit 23 into the protocol format to be converted to and output it to the communication protocol transceiver interface 33. For example, when receiving the valid Ethernet data from the control unit 23, it is necessary to convert the data into IEC61850 protocol data, then the Ethernet data link layer driver 241 encapsulates the valid Ethernet data into data in the IEC61850 protocol format and outputs it to the communication protocol transceiver interface 33.

The custom protocol conversion submodule 242 is configured to extract the valid custom data from the custom protocol data from the communication protocol transceiver interface 33, or to re-encapsulate the valid custom data from the control unit 23 into the protocol format to be converted to and output it to the communication protocol transceiver interface 33. For example, when receiving the valid custom data from the control unit 23, it is necessary to convert the data into IEC61850MMS protocol data, then the custom protocol conversion submodule 242 encapsulates the valid custom data into data in IEC61850MMS protocol format and outputs it to the communication protocol transceiver interface 33.

In this embodiment, by providing the Ethernet data link layer driver 241 and the custom protocol conversion submodule 242, the valid data can be extracted or encapsulated from the first data and the second data, thereby improving the conversion efficiency.

In an embodiment of the present application, the Ethernet data link layer driver 241 is provided at the programmable logic gate array 24, and the custom protocol conversion submodule 242 is provided at the programmable logic gate array 24 or the control unit 23, wherein the first sub-interface 221 is provided at the Ethernet data link layer driver 241, and the second sub-interface 222 is provided at the custom protocol conversion submodule 242.

In this embodiment, the Ethernet data link layer driver 241 is configured to transmit the Ethernet protocol data; and the custom protocol conversion submodule 242 is configured to transmit the custom protocol data. It can be understood that the custom protocol conversion submodule 242 may be provided in the programmable logic gate array 24 or in the control unit 23.

The first sub-interface 221 is used to connect the Ethernet data link layer driver 241 to the communication protocol transceiver interface 33 to complete the transmission and reception of the Ethernet data between the two. The second sub-interface 222 is used to connect the custom protocol conversion sub-module 242 to the communication protocol transceiver interface 33 to complete the transmission and reception of the custom protocol data between the two.

As shown in FIG. 8, FIG. 8 is a schematic structural diagram showing connection between a protocol conversion module and a communication protocol transceiver module according to an embodiment of the present application.

In an embodiment of the present application, the conversion apparatus further includes a CAN protocol transceiver module 1 and a communication protocol transceiver module 3, the CAN protocol transceiver module 1 is connected to the protocol conversion module 2 through the CAN protocol transceiver interface 14, and the communication protocol transceiver module 3 is connected to the protocol conversion module 2 through the communication protocol transceiver interface 33.

In this embodiment, the communication protocol transceiver interface 33 includes an Ethernet protocol transceiver interface and a custom protocol transceiver interface, wherein the Ethernet protocol transceiver interface is connected to the first sub-interface 221 and is used to transmit and receive the Ethernet protocol data, and the communication protocol transceiver interface is connected to the second sub-interface 222 and is used to transmit and receive the custom protocol data.

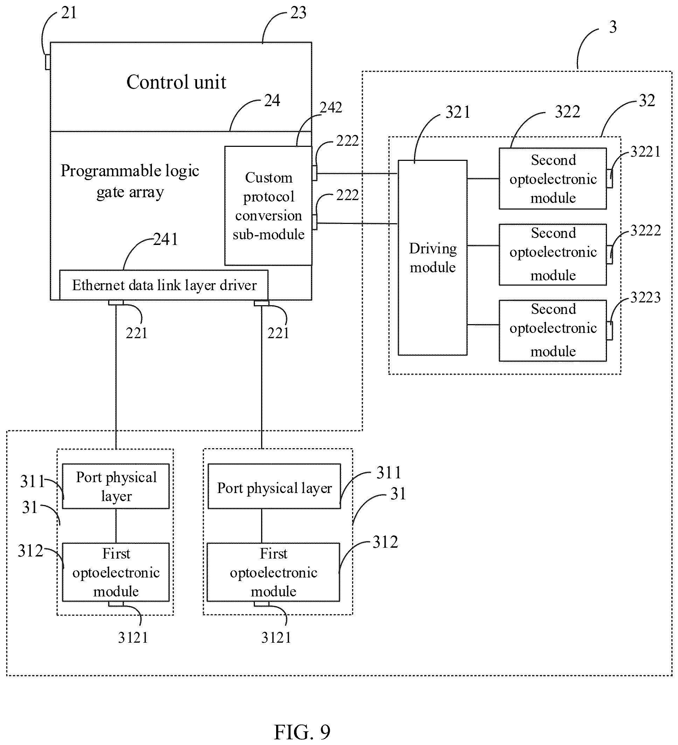

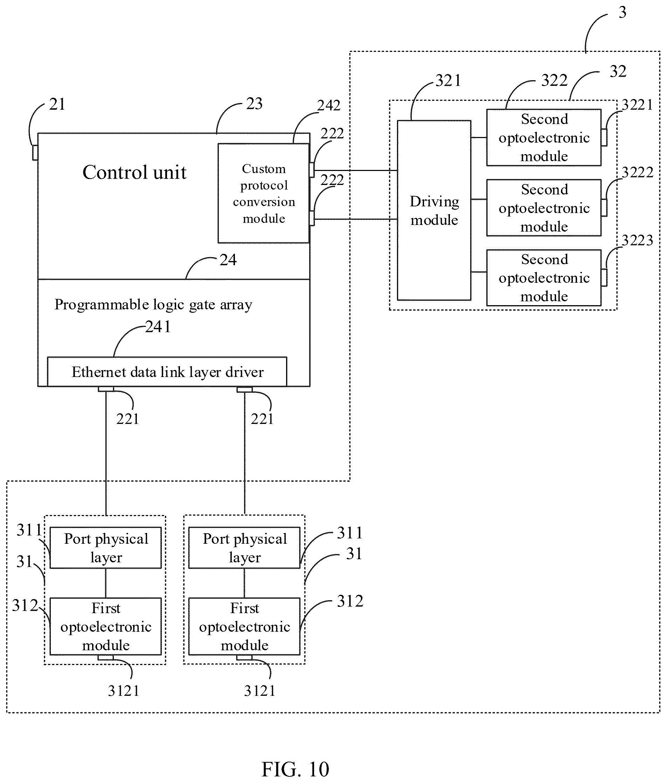

As shown in FIGS. 9 and 10, FIG. 9 is another schematic structural diagram of a conversion apparatus according to an embodiment of the present application; and FIG. 10 is another schematic structural diagram showing connection between a protocol conversion module and a communication protocol transceiver module according to an embodiment of the present application.

In an embodiment of the present application, the communication protocol transceiver module 3 includes a custom protocol transceiver submodule 32 and a plurality of Ethernet protocol transceiver submodules 31, the custom protocol transceiver submodule 32 is connected to the custom protocol conversion submodule 242, and the plurality of Ethernet protocol transceiver submodules 31 are all connected to the Ethernet data link layer driver 241.

In this embodiment, the custom protocol transceiver submodule 32 is configured to receive the custom protocol data transmitted by the protocol conversion module and convert the custom protocol data into optical signal for output; and the Ethernet protocol transceiver submodule 31 is configured to convert the Ethernet protocol data into optical signal for output. The transmission of the custom protocol data and the Ethernet protocol data can be realized through the custom protocol transceiver submodule 32 and the Ethernet protocol transceiver submodule 31.

In an embodiment of the present application, the Ethernet protocol transceiver submodule 31 includes a port physical layer 311 and a first optoelectronic module 312 that are interconnected, the Ethernet data link layer driver 241 is connected to the port physical layer 311 through the first sub-interface 221, and the first optoelectronic module 312 is provided with an Ethernet communication interface 3121, wherein the port physical layer 311 is configured for signal format conversion of the Ethernet protocol data transmitted and received by the Ethernet communication interface 3121.

In this embodiment, the port physical layer 311 is a PHY chip, which is composed of a physical layer interface, a chip, and peripheral circuits. The port physical layer 311 converts the signal format of the Ethernet protocol data sent by the Ethernet communication interface 3121 from analog signals to digital signals and sends the data to the Ethernet data link layer driver 241. At the same time, it converts the signal format of the Ethernet protocol data sent by the Ethernet data link layer driver 241 from digital signals to analog signals and sends the data to the first optoelectronic module 312. The first optoelectronic module 312 is configured to complete mutual conversion between an optical signal and an electrical signal. For example, when the Ethernet communication interface 3121 receives an optical signal, the optical signal is converted into an electrical signal by the first optoelectronic module 312.

By providing the port physical layer 311, the first optoelectronic module 312, and the Ethernet communication interface 3121, accurate reception and transmission of the Ethernet data can be realized, thereby improving the operation efficiency of the conversion apparatus, enabling mutual conversion between the CAN protocol data and the Ethernet protocol data.

In an embodiment of the present application, the custom protocol transceiver submodule 32 includes a driving module 321 and a plurality of second optoelectronic modules 322 connected to the driving module 321, the custom protocol conversion submodule 242 is connected to the driving module 321 through the second sub-interface 222, and the second optoelectronic module 322 is provided with a second optoelectronic module 3221, wherein the driving module 321 is configured for signal format conversion of the custom protocol data transmitted and received by the second optoelectronic module 3221.

In this embodiment, the driving module 321 converts the signal format of the custom protocol data sent by the second optoelectronic module 3221 from an analog signal to a digital signal and sends the data to the custom protocol conversion submodule 242. At the same time, it converts the signal format of the custom protocol data sent by the custom protocol conversion submodule 242 from a digital signal to an analog signal and sends the data to the second optoelectronic module 322. The second optoelectronic module 322 is configured to complete mutual conversion between an optical signal and an electrical signal. For example, when the second optoelectronic module 3221 receives an optical signal, the optical signal is converted into an electrical signal by the second optoelectronic module 322.

By providing the driving module 321, the second optoelectronic module 322, and the second optoelectronic module 3221, accurate reception and transmission of the custom protocol data can be realized, thereby improving the operation efficiency of the conversion apparatus, enabling mutual conversion between the CAN protocol data and the custom protocol data.

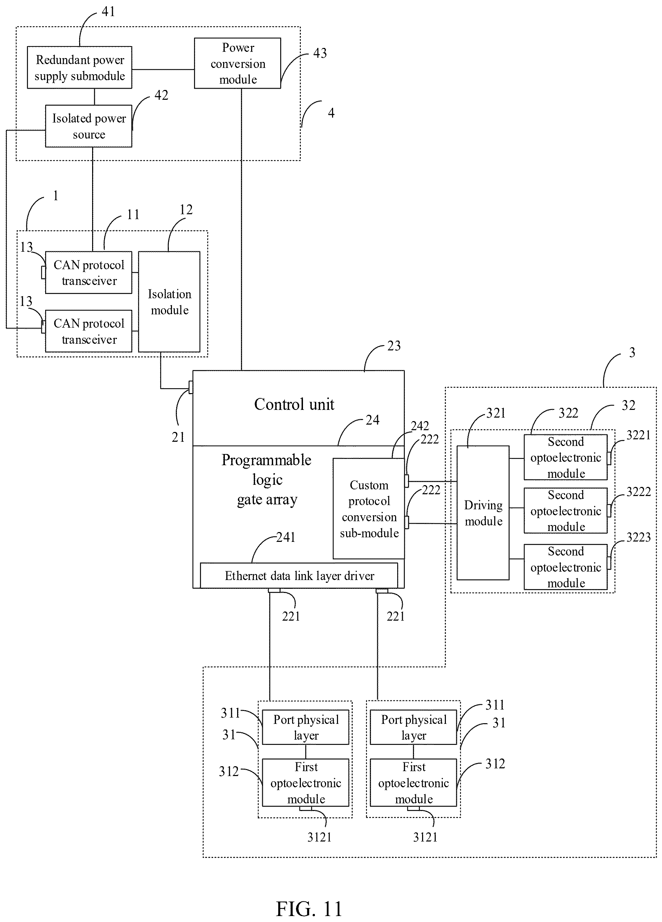

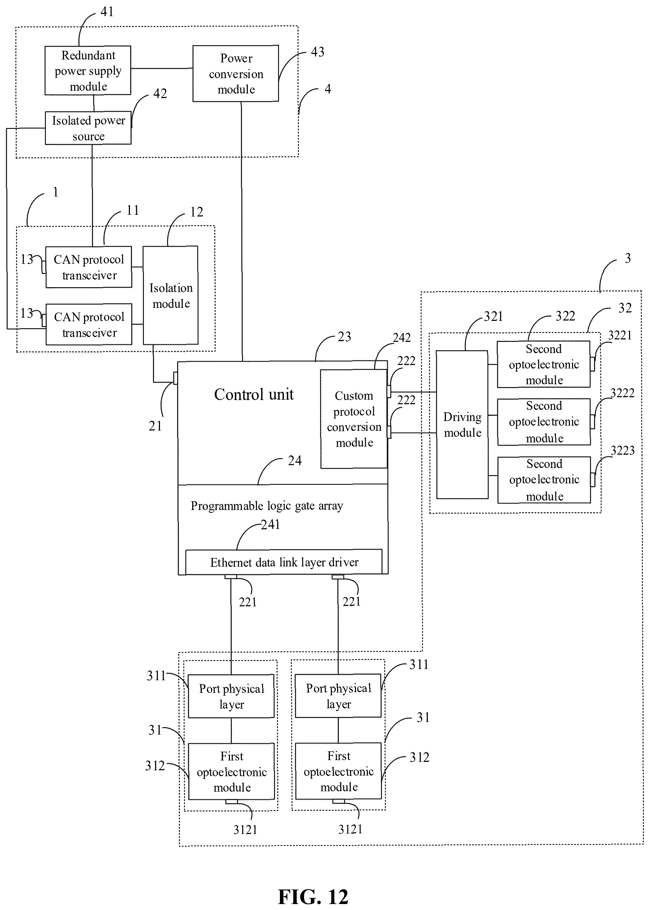

As shown in FIGS. 11 and 12, FIG. 11 is another schematic structural diagram of a conversion apparatus according to an embodiment of the present application; and FIG. 12 is another schematic structural diagram of a conversion apparatus according to an embodiment of the present application.

In an embodiment of the present application, the CAN protocol transceiver module 1 includes a plurality of CAN protocol transceivers 11, each of the plurality of CAN protocol transceivers 11 being redundant to another; and the CAN protocol transceiver 11 is provided with a CAN communication interface 13, the CAN communication interface 13 being configured to transmit the first data.

The CAN protocol transceiver module 1 further includes an isolation module 12 connected to the plurality of CAN protocol transceivers 11, the isolation module 12 being further connected to the control unit 23; and the isolation module 12 is configured to isolate the CAN protocol transceivers 11 from the control unit 23 to prevent voltage in the CAN protocol transceivers 11 from damaging the control unit 23.

In this embodiment, the CAN protocol transceivers 11 are configured to encapsulate the CAN protocol data and send it to the CAN communication interface 13 or the control unit 23. There are a plurality of CAN protocol transceivers 11, specifically two, three, or four of them, which is not limited herein in the present application. As there are the plurality of CAN protocol transceivers 11 and the individual CAN protocol transceivers 11 are made redundant to each other, if one of the CAN protocol transceivers 11 fails, another CAN protocol transceiver 11 is automatically switched to for transmission of the first data, thereby improving the fault tolerance of the conversion apparatus.

In an embodiment of the present application, the conversion apparatus further includes a power supply module 4. The power supply module 4 is respectively connected to the protocol conversion module 2 and the CAN protocol transceiver module 1, and the power supply module 4 is configured to supply power to the protocol conversion module 2 and the CAN protocol transceiver module 1.

In this embodiment, to ensure the endurance capacity of the conversion apparatus, it is necessary to supply power to the protocol conversion module 2 and the CAN protocol transceiver module 1. For this purpose, a power supply module 4 is provided. The power supply module 4 may be an energy storage device such as an accumulator cell or a dry cell, or it may be directly connected to AC power, which is not limited herein in the present application.

In an embodiment of the present application, the power supply module 4 includes a redundant power supply submodule and an isolated power source 42 and a power conversion module 43 respectively connected to the redundant power supply submodule, the redundant power supply submodule is connected to the protocol conversion module 2, and the isolated power source 42 is further connected to the CAN protocol conversion module 2, wherein the redundant power supply submodule 41 further includes a plurality of power input interfaces, each of the plurality of power input interfaces being redundant to another.

In this embodiment, to prevent the CAN protocol transceiver 11 from being damaged due to external overvoltage, surge, or other reasons, the isolated power source 42 is provided between the redundant power supply submodule and the CAN protocol transceiver 11 to protect the CAN protocol transceiver 11 and provide the CAN protocol transceiver 11 with the isolated power source 42. The power conversion module 43 is configured to provide the power required for operation to the protocol conversion module 2, the driving module 321, the port physical layer 311, the first optoelectronic module 312, the second optoelectronic module 322, etc. The power input interfaces are configured to receive external power input, and the plurality of power input interfaces are redundant to each other. If one of the power input interfaces fails, another power input interface will be automatically switched to for power input.

By providing the redundant power supply submodule, the isolated power source 42, and the power conversion module 43, the power supply of the conversion apparatus is guaranteed. At the same time, through the redundancy design, power can be supplied as long as any input power interface is valid, which increases the reliability of the power source.

The conversion apparatus in the present application can realize a plurality of operation modes. The conversion modes of the conversion apparatus in the present application are described below:
One approach, exemplified by converting CAN protocol data to IEC 60044-8 protocol, is as follows:
The CAN protocol communication interface receives the CAN protocol data. The plurality of CAN protocol transceivers 11 are redundant. If any one transceiver fails, another transceiver will be switched to. The data is transmitted sequentially to the control unit 23, the programmable logic gate array 24, the custom protocol conversion submodule 242, and the driving module 321. Finally, the plurality of second optoelectronic modules 3221 are redundant to each other. If any one module fails, another module will be automatically switched to for output. The first operation mode during transmission can be set to: transparent transmission or mapping according to the profile; the second operation mode can be set to: immediate transmission, variable transmission, or buffered transmission, etc.; and the CAN protocol communication interface supports baud rate setting, message filtering, linear numerical change and other functions through the profile.

One approach, exemplified by converting CAN protocol data to IEC 60044-8 protocol data, is as follows:
It is provided that the CAN protocol communication interface includes a first CAN protocol communication interface and a second CAN protocol communication interface; and the custom protocol data interface includes a first custom protocol data interface and a second custom protocol data interface; wherein the first CAN protocol communication interface and the first custom protocol data interface correspond to each other, and the second CAN protocol communication interface and the second custom protocol data interface correspond to each other, that is, the transmission paths are independent of each other.

The transmission process is as follows: the first CAN protocol communication interface receives the CAN protocol data and finally outputs the IEC 60044-8 protocol data through the first custom protocol data interface; and the second CAN protocol communication interface receives the CAN protocol data and finally outputs the IEC 60044-8 protocol data through the second custom protocol data interface.

One approach, exemplified by converting CAN protocol data to IEC 61850 MMS protocol data, is as follows:
The plurality of CAN protocol data communication interfaces are redundant to each other. CAN protocol data is input from the CAN protocol data communication interface and output from the Ethernet protocol data communication interface. The control unit 23 is a heterogeneous dual-core ARM processor, with one ARM core running the Linux operating system and the other ARM core running a real-time operating system.

First, the Linux core loads the ICD model file required for the MMS protocol to run, and then transmits the profile to the real-time core via shared memory. The real-time core parses the profile and sets the CAN interface (e.g., baud rate, message filtering, protocol mapping, etc). When the real-time core receives a CAN message, it parses the message according to the profile, converts it into variables in the MMS model file, and transmits it to the Linux core via shared memory. Upon receiving it, Linux sends the data out through the Ethernet protocol data communication interface via the MMS driver. Similarly, when the Ethernet protocol data communication interface receives the data, it can convert the data into CAN protocol data and send it out through the CAN protocol data communication interface.

One approach, by way of example, is as follows:
It is provided that the custom protocol data interface includes a first custom protocol data interface, a second custom protocol data interface, and a third custom protocol data interface.

The transmission process is as follows: In the custom protocol data interface routing mode, when the protocol conversion module 2 receives custom protocol data from the first custom protocol data interface or the second custom protocol data interface, it forwards the data to the third custom protocol data interface; conversely, upon receiving the data, the third custom protocol data interface can also send it to the first custom protocol data interface or the second custom protocol data interface. The communication protocol can be selected from IEC 60044-8, serial port, etc.

An embodiment of the present application further provides a transformer substation, including the conversion apparatus in any one of the above embodiments. It can be understood that the transformer substation has the beneficial effects of the conversion apparatus provided by the embodiments of the present application, for which a reference may be made to the specific descriptions of the conversion apparatus in the above embodiments, and descriptions thereof are omitted in this embodiment.

Although the present application has been described with reference to the preferred embodiments, without departing from the scope of the present application, various improvements may be made to the present application and parts therein may be replaced with equivalents. In particular, the technical features mentioned in the embodiments may be combined in any manner, as long as there is no structural conflict. The present application is not limited to the specific embodiments disclosed herein, but rather includes all technical solutions falling within the scope of the claims.

## Claims

1. A conversion apparatus, comprising:
a controller area network, CAN, protocol transceiver interface;
a communication protocol transceiver interface; and
a protocol conversion module provided with a first interface and a second interface, the first interface being connected to the CAN protocol transceiver interface, and the second interface being connected to the communication protocol transceiver interface,
wherein the protocol conversion module is configured to convert first data into second data, or to convert the second data into the first data, wherein the first data is transmitted in a CAN protocol and the second data is transmitted in a communication protocol.

2. The conversion apparatus of claim 1, wherein the protocol conversion module comprises a control unit; or
the protocol conversion module comprises a control unit and a programmable logic gate array that are interconnected.

3. The conversion apparatus of claim 2, wherein a profile is stored in the control unit, wherein the control unit uses the profile to convert the first data into the second data, or to convert the second data into the first data.

4. The conversion apparatus of claim 2, wherein:
in the case where the protocol conversion module comprises the programmable logic gate array, the second interface comprises a plurality of first sub-interfaces and a plurality of second sub-interfaces;
the first interface is provided in the control unit, and the first sub-interface and the second sub-interface are provided in the programmable logic gate array; or
the first interface and the second sub-interface are provided in the control unit, and the first sub-interface is provided in the programmable logic gate array.

5. The conversion apparatus of claim 4, wherein the first sub-interface is an Ethernet protocol data transceiver interface configured to transmit and receive Ethernet protocol data; and the second sub-interface is a custom protocol data transceiver interface configured to transmit and receive custom protocol data.

6. The conversion apparatus of claim 4, wherein the protocol conversion module further comprises an Ethernet data link layer driver and a custom protocol conversion submodule each connected to the communication protocol transceiver interface.

7. The conversion apparatus of claim 6, wherein the Ethernet data link layer driver is provided at the programmable logic gate array, the custom protocol conversion submodule is provided at the programmable logic gate array or the control unit, the first sub-interface is provided at the Ethernet data link layer driver, and the second sub-interface is provided at the custom protocol conversion submodule;
the Ethernet data link layer driver is configured to transmit Ethernet protocol data; and
the custom protocol conversion submodule is configured to transmit custom protocol data.

8. The conversion apparatus of any one of claims 1 to 7, further comprising a CAN protocol transceiver module and a communication protocol transceiver module, the CAN protocol transceiver module being connected to the protocol conversion module through the CAN protocol transceiver interface, and the communication protocol transceiver module being connected to the protocol conversion module through the communication protocol transceiver interface.

9. The conversion apparatus of claim 6, wherein the communication protocol transceiver module comprises a custom protocol transceiver submodule and a plurality of Ethernet protocol transceiver submodules, wherein the custom protocol transceiver submodule is connected to the custom protocol conversion submodule, and the plurality of Ethernet protocol transceiver submodules are all connected to the Ethernet data link layer driver.

10. The conversion apparatus of claim 9, wherein:
the Ethernet protocol transceiver submodule comprises a port physical layer and a first optoelectronic module that are interconnected; and
the Ethernet data link layer driver is connected to the port physical layer through the first sub-interface,
wherein the first optoelectronic module is provided with an Ethernet communication interface, and the port physical layer is configured for signal format conversion of the Ethernet protocol data transmitted and received by the Ethernet communication interface.

11. The conversion apparatus of claim 9, wherein:
the custom protocol transceiver submodule comprises a driving module and a plurality of second optoelectronic modules connected to the driving module; and
the custom protocol conversion submodule is connected to the driving module through the second sub-interface,
wherein the second optoelectronic module is provided with a custom protocol communication interface, and the driving module is configured for signal format conversion of the custom protocol data transmitted and received by the custom protocol communication interface.

12. The conversion apparatus of claim 9, wherein the CAN protocol transceiver module comprises a plurality of CAN protocol transceivers, wherein each of the plurality of CAN protocol transceivers is redundant to another and is provided with a CAN communication interface configured to transmit the first data.

13. The conversion apparatus of claim 12, wherein the CAN protocol transceiver module further comprises an isolation module connected to the plurality of CAN protocol transceivers and to the control unit and configured to isolate the CAN protocol transceivers from the control unit.

14. The conversion apparatus of any one of claims 1 to 13, further comprising a power supply module separately connected to the protocol conversion module and the CAN protocol transceiver module and configured to supply power to the protocol conversion module and the CAN protocol transceiver module.

15. The conversion apparatus of claim 14, wherein the power supply module comprises a redundant power supply submodule and an isolated power source and a power conversion module each connected to the redundant power supply submodule, wherein:
the redundant power supply submodule is connected to the protocol conversion module,
the isolated power source is further connected to the CAN protocol transceiver, and
the redundant power supply submodule further comprises a plurality of power input interfaces, each of the plurality of power input interfaces being redundant to another.

16. A transformer substation comprising the conversion apparatus of any one of claims 1 to 15.
